# EUROPEAN PATENT SPECIFICATION

(11) **EP 1 138 465 B1**
(45) Date of publication and mention of the grant of the patent: **03.09.2003**
(21) Application number: 00830243.2
(22) Date of filing: 31.03.2000
(51) Int. Cl.: B29C 53/60, B29C 53/64, B29C 53/66

(54) **Apparatus and process with a spindle for manufacturing a composite material tubular article**
Vorrichtung und Verfahren mit einem Spindelelement zur Herstellung eines rohrförmigen Verbundkörpers
Dispositif et procédé avec un mandrin pour la fabrication d'un élément tubulaire en matériau composite

(43) Date of publication of application: 04.10.2001
(73) Proprietor: VEM S.P.A., 40033 Casalecchio di Reno (Bologna) (IT)
(72) Inventor: Ferri, Ugo, 20146 Milano (IT)
(74) Representative: Tansini, Elio Fabrizio

(56) References cited:
- FR-A- 2 042 016

## Description

The present invention relates to an apparatus for manufacturing a tubular article of composite material comprising the features set forth in the preamble of claim 1.

The invention also relates to a process for manufacturing a tubular article of composite material comprising the features set forth in the preamble of claim 13.

These tubular articles find application, for example, in making drinkable-water and irrigation-water pipelines, low- and high-pressure piping, pipelines for industrial appliances or others.

In more detail, the invention can apply to apparatus and/or machinery intended for making tubular articles of composite material obtained through winding up of a continuous fibre band, of glass filaments for example, incorporated into a resin layer or another binding matrix.

It is known that these apparatus comprise a spindle consisting of a cage-shaped support structure arranged to support a tubular article being formed. In more detail, the cage-shaped support structure substantially is of cylindrical form and can be driven in rotation around its own longitudinal axis.

A continuous ribbon of metal material is wound up in concentric coils disposed consecutively in mutual side by side relationship, to form an outer skirt of the support structure.

More specifically, the continuous ribbon has an advancing portion defined by a spirally wound ribbon length and a return portion defined by a substantially rectilinear ribbon length extending internally of the support structure from one end to the opposite end of same.

Also provided are movement members adapted to pull the continuous ribbon from end to end of the advancing portion, in such a manner that each part of the continuous ribbon cyclically and continuously goes along the spiral length of the advancing portion and the rectilinear length of the return portion.

The material for formation of the tubular article, which usually consists of thread-like elements made of plastic reinforced by fibre glass, is applied to the continuous ribbon and, more particularly, to the advancing portion of said ribbon. These thread-like elements are wound up around the continuous ribbon and the support structure, thereby forming the tubular article which is moved away from the formation region.

Downstream of the last end of the support structure, at which the ribbon is pulled into the structure itself and the article being formed is slipped out of the support structure, there is a furnace or similar heating device in which polymerization of the material forming the tubular article takes place.

Document FR-A-2042045 discloses an apparatus comprising a spindle having a support structure mounted idle on a fixed shaft horizontally extending from a base, a skirt formed by plate-like elements slidably guided on the support structure, and a driving device connected with said plate-like elements to transmit a reciprocating axial motion to the latter when the mandrel is driven in rotation. The material for formation of the tubular article is wound around both the mandrel and a motorized rotating shaft parallely offset with respect to the mandrel. The motion caused to the forming material by the rotating shaft is transmitted to the mandrel, which is consequently driven in rotation.

All that being stated, the Applicant has found that the apparatuses for the manufacture of known tubular articles have some drawbacks and can be improved from different points of view, mainly in connection with the advancing system of the tubular article being formed, as well as the possibility of making tubular articles having a diameter smaller than 250 mm.

Another drawback of known apparatuses is connected with replacement of the spindle-forming components. In fact, when a tubular article of a diameter bigger and/or smaller than the diameter of the tubular article into production is required to be manufactured, the operators are obliged to dismantle the components forming the support structure and replace them with components adapted for the article to be produced. This operation is disadvantageous because the cage-shaped support structure comprises a high number of components. Consequently, dismantling and reassembling of the cage-shaped support structure causes an important slowing down in production, which will involve repercussions from an economical point of view.

It is an object of the present invention to propose an apparatus for manufacturing a tubular article having a reliable and compact advancing system.

Another object of the present invention is to propose an apparatus enabling manufacture of tubular articles of a diameter smaller than 250 mm.

A further object of the present invention is to reduce times required for arrangement of the apparatus to produce articles of a different diameter from that of the article into production.

The foregoing and still further objects that will also become more apparent during the following description, are substantially achieved by an apparatus for manufacturing a tubular article of composite material, comprising the features set out in the characterizing part of claim 1 and by a process for manufacturing a tubular article of composite material, comprising the features set out in the characterizing part of claim 13.

Further features and advantages will be best understood from the detailed description of a preferred but not exclusive embodiment of an apparatus and a process for manufacturing a tubular article, in accordance with the present invention. This description will be taken hereinafter with reference to the accompanying drawings, given by way of non-limiting example, in which:
- Fig. 1 is a fragmentary perspective view of a spindle in accordance with the present invention, from which one of the plate-like elements cooperating in forming the skirt have been removed;
- Fig. 2 is an elevation view of the spindle shown in Fig. 1, operatively associated with an apparatus for manufacturing tubular articles of composite material;
- Fig. 3 shows a detail of the subject spindle to an enlarged scale;
- Fig. 4 is a cross-section representation of the spindle in question taken along line IV-IV in Fig. 3.

With reference to the drawings, a spindle for manufacturing a tubular article of composite material in accordance with the present invention has been generally identified by reference numeral 1.

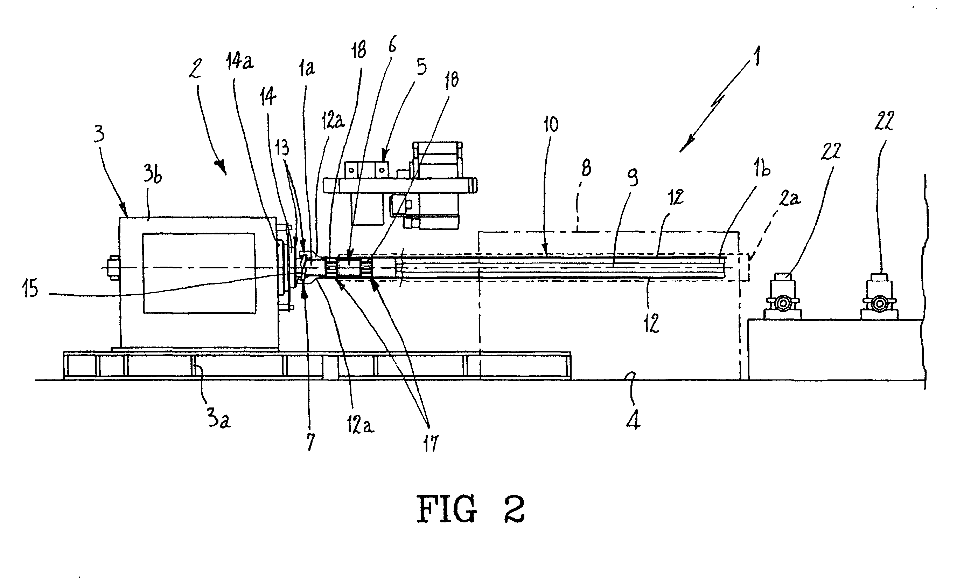

In more detail, the present invention can be applied to an apparatus, device or machinery (Fig. 2) intended for production of tubular elements of composite material, such as plastic reinforced by fibre glass and the like, for example. This apparatus, generally denoted by 2, contemplates manufacture of at least one continuous tubular article 2a through winding up around spindle 1 of one or more glass filaments, possibly gathered to form a continuous band or ribbon or strap and incorporated into a layer of resin, a thermoplastic or thermosetting resin for example, or into another binding matrix.

As viewed from Fig. 2, apparatus 2 comprises a base 3 having a lower portion 3a enabling the base 3 to steady rest on a support surface 4 and an upper portion 3b extending over the lower portion 3a and from which spindle 1 laterally extends in cantilevered fashion. Held within the upper portion 3b are all components necessary for actuation of spindle 1. In more detail, spindle 1 is mechanically connected with a motor located within the upper portion 3b of base 3 through a connecting end 1a. When the motor is started, spindle 1 is consequently driven in rotation around its own rotation axis "X".

Deposition means 5 for application of a material designed to form the tubular article 2a into production is also operatively associated with spindle 1. This deposition means 5 is suspended over spindle 1 and is arranged to act on an application region 6 of said spindle 1 which is close to the connecting end 1a of the latter, and to wind the material up around spindle 1 for formation of the tubular article 2a.

There is also the presence of advancing means 7 associated with spindle 1 to translate the formation material applied thereto in a direction away from the application region 6. In more detail, the material is brought from the connecting end 1a to the last end 1b of spindle 1 opposite to the connecting end 1a.

The simultaneous operations of winding the material up around spindle 1 and moving it forward involves formation of the continuous tubular article 2a the length of which increases as the production process goes on.

It is to be noted, at all events, that the deposition means 5 can be associated with a movable carriage or equivalent devices for transmitting a reciprocating motion parallel to spindle 1 to said means 5. In more detail, the carriage bearing the deposition means 5 is driven in a reciprocating motion at high speed away from and close to the connecting end 1a of spindle 1, causing deposition of the material filaments to give rise to a material formation according to a substantially longitudinal orientation.

More specifically, the reciprocating motion of the deposition means 5 enables formation, helically around spindle 1, of a wide band of material having its own fibres or sheets disposed in alternated lengths oriented substantially in a direction parallel to the longitudinal axis "X" of spindle 1.

Apparatus 2 also involves the presence of a furnace 8 or similar heating device identified by a chain line in Fig. 2, through which the tubular article 2a formed on spindle 1 is designed to pass. In furnace 8 the material forming the tubular article structure polymerizes into its final configuration.

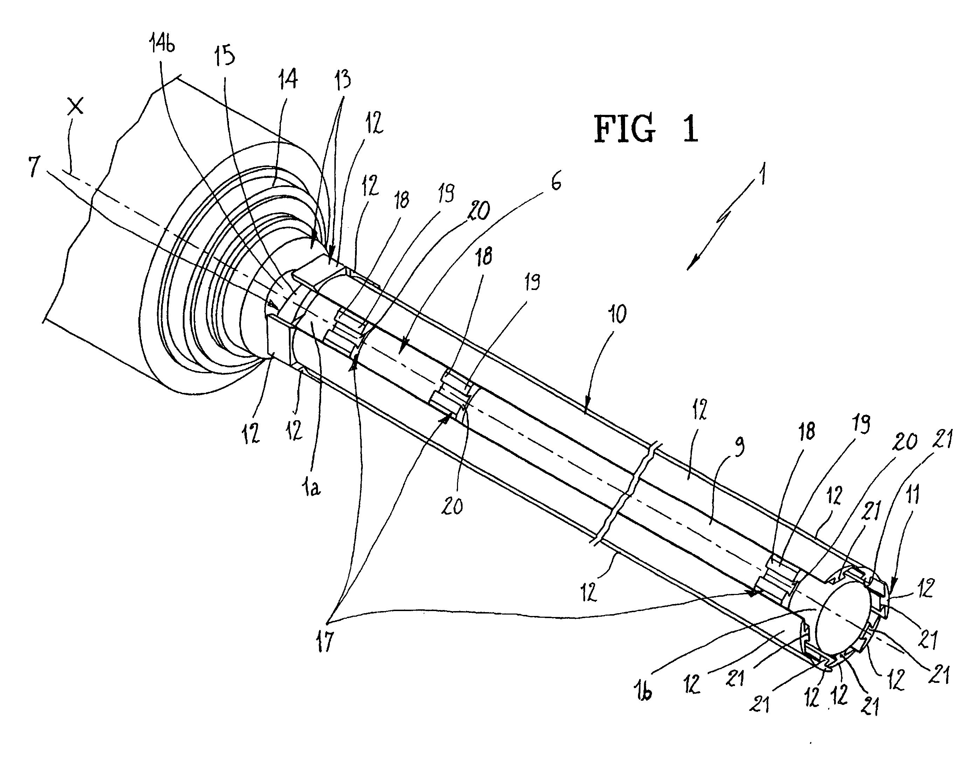

As shown in Figs. 1, 3 and 4, spindle 1 comprises a support structure 9 substantially constituting the spindle core and a skirt 10 circumscribing the support structure 9. Skirt 10 has a substantially continuous outer surface 11 arranged to receive the material for formation of the tubular article 2a.

In this particular case, skirt 10 comprises a plurality of plate-like elements 12 slidably guided on the support structure 9 and disposed circumferentially in mutual side by side relationship to form the continuous outer surface 11.

As viewed from Figs. 1, 2 and 3, the advancing means 7 is carried by spindle 1. More specifically, the advancing means 7 comprises at least one driving device 13 connected with the plate-like elements 12 to transmit a reciprocating motion to said elements along a direction substantially parallel to the longitudinal axis "X" of the support structure 9. In more detail, the motion of each plate-like element 12 is defined by a forward stroke involving moving of the plate-like element 12 away from the connecting end 1a, and a backward or return stroke, in the opposite direction with respect to the forward stroke and involving moving of the plate-like element 12 close to the connecting end 1a.

In addition, the driving device 13 is arranged to cause the forward stroke of at least one plate-like element 12 simultaneously with the return stroke of at least another plate-like element 12. Preferably, the driving device 13 simultaneously transmits the forward stroke to a number of plate-like elements 12 greater than the number of plate-like elements 12 carrying out the return stroke thereby ensuring moving forward of the material for formation of the tubular article 2a.

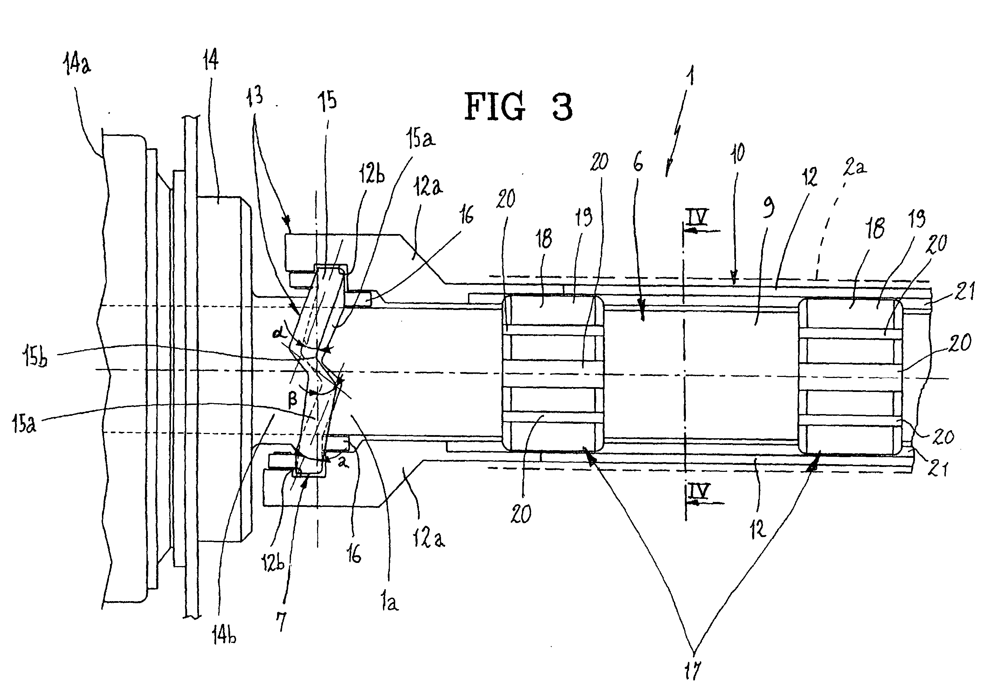

With reference to Fig. 3, the driving device 13 comprises at least one fixed element 14 circumscribing the support structure 9 of spindle 1, carrying at least one circumferential guide cam 15 interacting with an end 12a of each plate-like element 12 to cause the reciprocating motion thereof. The fixed element 14 has a first end 14a rigidly connected to the upper portion 3b of base 3 and a second end 14b terminating with the circumferential guide cam 15. In detail, the circumferential guide cam 15 projects by its surface from the fixed element 14 and each plate-like element has at least one guide seating 12b formed at its end 12a to operatively engage the circumferential guide cam 15.

More specifically, operatively engaged in the end 12a of each plate-like element 12 are rolling elements 16 engaging the circumferential guide cam 15 at respectively opposite sides. In other words, the circumferential guide cam 15 constitutes a circumferential sliding track for each plate-like element 12, that, upon driving in rotation of spindle 1, has the rolling elements 16 rolling on the circumferential guide cam 15.

Alternatively, the circumferential guide cam 15 may consist of a circumferential groove formed in the fixed element 14 in which the ends 12a of the respective plate-like elements 12 engage either directly or indirectly through intermediate elements.

Still with reference to Fig. 3, the circumferential guide cam 15 has at least one first and one second consecutive helical lengths 15a, 15b causing the forward and return strokes respectively of each plate-like element 12. In this particular case, the circumferential guide cam 15 has two or more first helical lengths 15a sequentially and circumferentially alternated with two or more second helical lengths 15b.

The first helical lengths 15a extend, with respect to a circumferential reference line "Z" shown in chain line in Fig. 3, with an inclination opposite to the inclination of the second lengths 15b. In addition, the inclination line of each first length 15a, by intersecting the circumferential reference line "Z" defines an angle of inclination "α" of a lower width than that of an angle of inclination "β" defined by the intersection of the inclination line of each second length 15b with the circumferential reference line "Z", so that the return stroke of each plate-like element 12 is quicker than the forward stroke of same.

As shown in the accompanying drawings, interposed between the support structure 9 and the skirt 10 is coupling means 17 to drive in rotation the plate-like elements 12 of the skirt 10 integrally with the support structure itself. In detail, the coupling means 17 comprises interconnecting elements 18 removably fastened to the support structure 9 and rotating together with at least one plate-like element 12.

Each interconnecting element 18 has an outer surface 19 in which slide seatings 20 are formed which substantially extend in a direction parallel to the longitudinal axis "X" of the support structure 9 and each plate-like element 12 has at least one sliding element 21 insertable in the respective slide seating 19 of the interconnecting element 18.

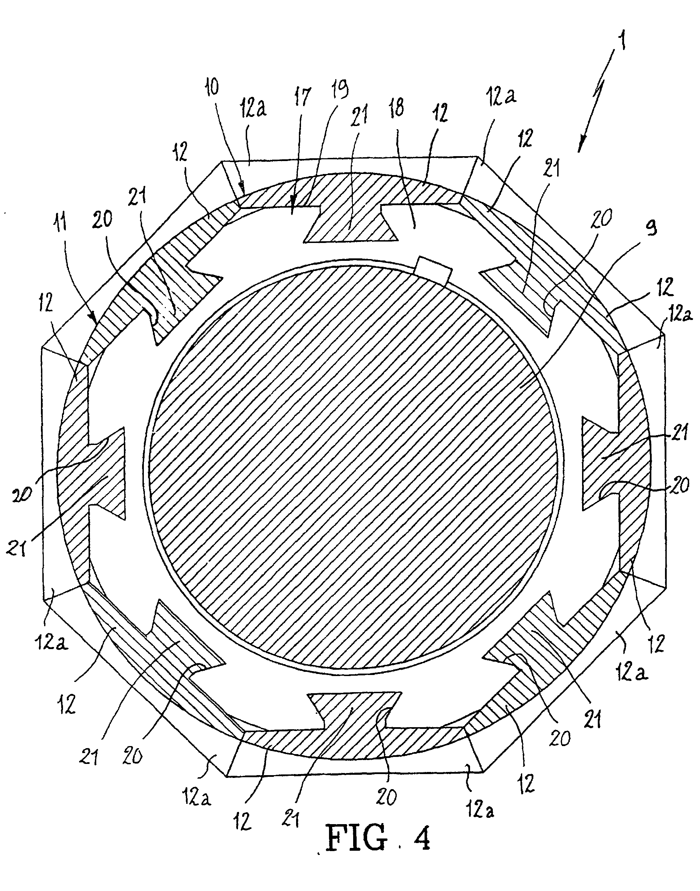

As viewed from the section of Fig. 4, each slide seating 20 and each sliding element 19 has a substantially dovetail-shaped outline. It should be however considered that the slide seatings 20 and sliding elements 19 can extend following any profile ensuring one degree alone of freedom, i.e. sliding of the respective plate-like element 12 in a mainly longitudinal direction.

To the aims of the present invention, the slide seatings 20 can be provided to be formed directly in the outer surface of the support structure 9 in such a manner that the sliding elements 12 are slidably guided directly thereon without interposition of any interconnecting element 18.

Operation of spindle 1 described above mainly as regards structure will be set forth hereinafter.

When apparatus 2 is in operation, rotation of spindle 1 around its longitudinal axis "X" takes place. In more detail, the spindle portion directly submitted to the action of the motor enclosed in base 3 consists of the support structure 9. Since the interconnecting elements 18 are fastened to the support structure 9, they rotate integrally therewith around the longitudinal axis "X".

Consequently, each plate-like element 12 is driven in rotation around the longitudinal axis "X" by the interconnecting elements 18 and interacts, by its respective end 12a, with the circumferential guide cam 15 to carry out an axial backwards and forwards translation. In more detail, during rotation of spindle 1, the guide seating 12b of each plate-like element 12 cyclically goes along the circumferential guide cam 15 which is fixed. Under this situation, the guide seating 12b of each plate-like element 12 follows the outline of the circumferential guide cam 15 so that both the first helical lengths 15a and the second helical lengths 15b are concerned.

When the guide seating 12b of a plate-like element 12 goes along the first helical length 15a, this plate-like element is pushed in a direction parallel to the longitudinal axis "X" towards the last end 1b of spindle 1. When the guide seating 12b of the plate-like element 12 reaches the second helical length 15b which is consecutive to the first length 15a, the plate-like element 12 located at the forward end-of-stroke point is pulled towards the connecting end 1a. When the guide seating 12b reaches the subsequent first helical length 15a, the forward/return cycle of the plate-like element starts again.

Since the plate-like elements 12 are circumferentially distributed around the longitudinal axis "X", some of them engage, by their guide seating 12b, the first helical lengths 15a while others engage the second helical lengths 15b. Accordingly, a preestablished number of plate-like elements 12 carries out the forward stroke simultaneously with a preestablished number of plate-like elements 12 carrying out the return stroke. In detail, it is preferable that the number of plate-like elements 12 carrying out the forward stroke should be greater than the number of the plate-like elements 12 carrying out the return stroke, so that the tubular article 2a being formed moves forward as the formation material is laid down on spindle 1.

The application means 5 lays down the material for formation of the tubular article 2a on the application region 6 of spindle 1. The continuous material is wound up on the skirt 10 of spindle 1 by effect of the rotation of same while it is moving towards the last end 1b upon the action of the plate-like elements 12 carrying out the forward stroke. More specifically, moving forward of the material for formation of the tubular article is caused by the movement of the plate-like elements 12 during their forward stroke, which elements move at a relatively reduced speed accompanying with their movement the material laid down on the spindle.

The plate-like elements 12 during their return stroke do not hinder the action of the plate-like elements 12 carrying out their forward stroke because their number is smaller. In addition, due to the particular shape of the circumferential guide cam 15, each plate-like element 12 carries out its return stroke at a higher speed than its forward stroke, in such a manner that it slides within the tubular article 2a formed on spindle 1 without causing any important dragging action thereon.

The tubular article 2a goes on increasing its length as the production process continues, until it projects from the last end 1b of spindle 1 and is engaged on support elements 22 disposed downstream of the spindle itself.

When the tubular article 2a being formed passes through furnace 8, the heating action of this furnace causes the article polymerization and stabilization of its final molecular structure.

The invention solves all problems encountered in the known art and shows important advantages.

First of all, the advancing system being the object of the present invention enables achievement of a compact and practical spindle as regards dismantling and reassembling of same when tubular articles having diameters and/or thicknesses different from those of the tubular article into production are required to be produced.

In addition, the apparatuses provided with such a spindle are greatly lightened in their structure because the advancing system of the tubular article is directly carried by the spindle which constitutes an integral part thereof.

It is also to be considered that with the subject spindle, tubular articles of a diameter greatly smaller than 250 mm, until values even lower than about 80 mm, can be made.

## Claims

1. An apparatus for manufacturing a tubular article comprising:
- a base (3);
- a motor;
- a spindle (1) operatively in engagement with said base (3) to be driven in rotation around its own longitudinal axis ("X");
- deposition means (5) operatively associated with said spindle (1) to apply material for formation of a tubular article to an application region (6) of said spindle (1);
wherein said spindle comprises:
- a support structure (9) ;
- a skirt (10) circumscribing said support structure (9) and having an outer surface (11) arranged to receive a material for formation of a tubular article in an application region (6),
- advancing means (7) operating on said skirt (10) to move said formation material away from the application region (6),
wherein said skirt (10) comprises a plurality of plate-like elements (12) slidably guided on the support structure (9) and disposed circumferentially in mutual side by side relationship, said advancing means (7) comprising at least one driving device (13) connected with said plate-like elements (12) to transmit a reciprocating motion to the latter along a direction substantially parallel to the longitudinal axis ("X") of the support structure (9), **characterized in that** said support structure (9) is mechanically connected with said motor to be driven in rotation around its own longitudinal axis ("X"), coupling means (17) being interposed between said support structure (9) and said skirt (10) to drive in rotation the plate-like elements (12) of said skirt (10) integrally with said support structure (9).

2. A spindle as claimed in claim 1, wherein the driving device (13) causes a forward stroke of at least one plate-like element (12) simultaneously with a return stroke of at least another plate-like element (12).

3. A spindle as claimed in claim 2, wherein the driving device (13) simultaneously transmits the forward stroke to a number of plate-like elements (12) greater than the number of the plate-like elements (12) carrying out the return stroke.

4. An apparatus as claimed in claim 1, wherein said coupling means (17) comprises at least one interconnecting element (18) removably fastened to said support structure (9) and rotating together with at least one of said plate-like elements (12).

5. An apparatus as claimed in claim 4, wherein said plate-like elements (12) are slidably guided on said interconnecting element (18).

6. An apparatus as claimed in claim 4, wherein said interconnecting element (18) has an outer surface (19) in which slide seatings (20) are formed which extend in a direction parallel to the longitudinal axis ("X") of said support structure (9) and each plate-like element (12) has at least one sliding element (21) insertable in the respective slide seating (20) of the interconnecting element (18).

7. An apparatus as claimed in claim 6, wherein said slide seatings (20) and sliding elements (21) have a substantially dovetail-shaped cross-section outline.

8. An apparatus as claimed in claim 1, wherein said driving device (13) comprises at least one fixed element (14) circumscribing said support structure (9) and carrying at least one circumferential guide cam (15) interacting with an end (12a) of each plate-like element (12) to cause the reciprocating motion of the latter.

9. An apparatus as claimed in claim 8, wherein said circumferential guide cam (15) projects by its surface from said fixed element (14).

10. An apparatus as claimed in claim 8, wherein said circumferential guide cam (15) has at least one first and one second consecutive helical lengths (15a, 15b) causing the forward stroke and return stroke respectively of each plate-like element (12) slidably guided on said support structure (9).

11. An apparatus as claimed in claim 10, wherein said first helical lengths (15a), with respect to a circumferential reference line ("Z") of said fixed element, have an inclination (α) of smaller value and opposite orientation with respect to an inclination (β) measurable on the second helical lengths (15b), so that the return stroke of each plate-like element (12) is quicker than the forward stroke.

12. An apparatus as claimed in claim 9, wherein said end (12a) of each plate-like element (12) has at least one guide seating (12b) operatively engaging the circumferential guide cam (15) for sliding along the support structure (9).
**characterized in that** said spindle (1) is obtained in accordance with one or more of the preceding claims.

13. A process for manufacturing a tubular article **characterized in that** it comprises the following sequence of steps:
- driving in rotation a support structure (9) of a spindle (1) around its own longitudinal axis ("X");
- applying a material for formation of a tubular article close to an application region (6) defined on an outer surface (11) of a skirt (10) circumscribing said support structure (9);
- carrying out translation of the material for formation of the tubular article along the support structure (9) in a direction away from said application region (6),
wherein translation of the material for formation of the tubular article is carried out through movement of a plurality of plate-like elements (12), disposed circumferentially in mutual side by side relationship to form said skirt (10), in a rectilinear reciprocating motion substantially parallel to the longitudinal axis ("X").

14. A process as claimed in claim 13, wherein the movement of each plate-like element (12) is defined by a forward stroke and a return stroke and wherein at least one plate-like element (12) carries out the forward stroke simultaneously with the return stroke of at least another plate-like element (12).

15. A process as claimed in claim 14, wherein the return stroke of each plate-like element (12) is carried out more quickly than the forward stroke.

16. A process as claimed in claim 14, wherein the number of the plate-like elements (12) carrying out the forward stroke is greater than the number of the plate-like elements (12) carrying out the return stroke.

## Patentansprüche

1. Vorrichtung zur Herstellung eines rohrförmigen Verbundkörpers, umfassend:
- ein Untergestell (3);
- einen Antrieb;
- eine Spindel (1), die wirksam am Untergestell (3) in Eingriff steht und um die eigene Längsachse ("X") drehantreibbar ist;
- Ablegemittel (5), die der Spindel (1) wirksam zugeordnet sind, um Material zur Bildung eines rohrförmigen Verbundkörpers in einem Auftragbereich (6) der Spindel (1) anzubringen;
wobei die Spindel umfasst:
- eine Tragstruktur (9),
- einen Mantel (10), der die Tragstruktur (9) umschreibt und eine Außenfläche ()11) aufweist, die bereitgestellt ist, Material zur Bildung eines rohrförmigen Verbundkörpers im Auftragbereich (6) aufzunehmen,
- Vorschubmittel (7), die auf den Mantel (10) wirken, um das Material zur Bildung des rohrförmigen Verbundkörpers vom Auftragbereich (6) zu entfernen;
wobei der Mantel (6) eine Vielzahl von Plattenteilen (12) umfasst, die auf der Tragstruktur (9) verschiebbar geführt und längs des Umfanges aneinander gereiht sind,
wobei die Vorschubmittel (7) mindestens eine Betätigungsvorrichtung (13) umfassen, die mit den Plattenteilen (12) verbunden ist, um diesem letzteren eine Hin- und Herbewegung längs einer im wesentlichen zur Längsachse ("X") der Tragstruktur (9) parallelen Richtung zu übertragen, **dadurch gekennzeichnet, dass** die Tragstruktur (9) mit dem Motor mechanisch verbunden ist, um, um die eigene Längsachse ("X") drehangetrieben zu werden, wobei Verbindungsmittel (17) zwischen der Tragstruktur (9) und dem Mantel (10) liegen, um die Plattenteile (12) des Mantels (10) drehfest mit der Tragstruktur (9) zu vereinen.

2. Spindel nach Anspruch 1, bei der die Betätigungsvorrichtung (13) einen Hinhub mindestens eines Plattenelementes (12) simultan mit einem Rückhub mindestens eines weiteren Plattenelementes (12) festlegt.

3. Spindel nach Anspruch 1, bei der die Betätigungsvorrichtung (13) simultan den Hinhub einer Anzahl von Plattenteilen (12) überträgt, die größer ist als die Anzahl der Plattenteile (12), die den Rückhub bewirken.

4. Vorrichtung nach Anspruch 1, bei der die Verbindungsmittel (17) mindestens ein Verbindungselement (18) umfassen, das an der Tragstruktur (9) und drehfest mit einem der Plattenteile (12) befestigt ist.

5. Vorrichtung nach Anspruch 4, bei der die Plattenteile (12) auf mindestens einem Verbindungselement (18) verschiebbar geführt sind.

6. Vorrichtung nach Anspruch 4, bei der das Verbindungselement (18) eine Außenfläche (19) aufweist, auf der Gleitsitze (20) ausgenommen sind, die sich parallel zur Längsachse ("X") der Tragstruktur (9) erstrecken, und wobei jeder Plattenteil (12) mindestens ein Gleitelement (21) aufweist, das in den entsprechenden Gleitsitz (20)des Verbindungselementes (18) einführbar ist.

7. Vorrichtung nach Anspruch 6, bei der die Gleitsitze (20) und die Gleitelemente (21) im Querschnitt ein im wesentlichen schwalbenschwanzförmiges Profil aufweisen.

8. Vorrichtung nach Anspruch 1, bei der die Betätigungsvorrichtung (13) mindestens ein festes Element (14) umfasst, das die Tragstruktur (9) umschreibt und mindestens einen Führungsnocken (15) längs des Umfanges trägt, der mit einem Ende (12a) eines jeden Plattenteiles (12) zusammenwirkt, um dessen Hin- und Herbewegung zu bewirken.

9. Vorrichtung nach Anspruch 8, bei der der Führungsnocken (15) längs des Umfanges aus der Oberfläche des festen Elementes (14) vorspringt.

10. Vorrichtung nach Anspruch 8, bei der der Führungsnocken (15) längs des Umfanges mindestens einen ersten und zweiten schraubenlinienförmigen Abschnitt (15a, 15b) aufweist, die aufeinanderfolgen und jeweils den Hin- und Rückhub eines jeden Plattenteils (12) bewirken, der auf der Tragstruktur (9) verschiebbar geführt ist.

11. Vorrichtung nach Anspruch 10, bei der die ersten schraubenlinienförmigen Abschnitte (15a) gegenüber einer Referenzumfangslinie ("Z") des festen Elementes eine Neigung (α) aufweisen, die gegenüber einer Neigung (β) kleiner und abgewandter Ausrichtung ist, die auf zweiten schraubenlinienförmigen Abschnitten (15b) erfassbar ist, wodurch der Rückhub eines jeden Plattenteils (12) schneller als der Hinhub ist.

12. Vorrichtung nach Anspruch 9, bei der das Ende (12a) eines jeden Plattenteils (12) mindestens einen Führungssitz (12b) aufweist, der den Führungsnocken (15) längs des Umfanges wirksam ergreift, um längs der Tragstruktur (9) verschoben zu werden.

13. Verfahren zur Herstellung eines rohrförmigen Verbundkörpers, **dadurch gekennzeichnet, dass** es folgende Reihenfolge von Schritten umfasst:
- Drehantreiben einer Tragstruktur (9) einer Spindel (1) um die eigene Längsachse ("X") herum;
- Anbringen eines Materials zur Bildung eines rohrförmigen Verbundkörpers, in einem Auftragbereich (6), der auf einer Außenfläche (11) eines Mantels (10) festgelegt ist, welche die Tragstruktur (9) umschreibt;
- Verstellen des Materials zur Bildung des rohrförmigen Verbundkörpers längs der Tragstruktur (9) vom Auftragbereich (6) weg;
bei dem die Verstellung des Materials zur Bildung des rohrförmigen Verbundkörpers über die Bewegung einer Vielzahl von Plattenteilen (12) durchgeführt wird, die längs des Umfanges aneinandergereiht ist, um den Mantel (10) gemäß einer geradlinigen im wesentlichen zur Längsachse ("X") parallelen Hin- und Herbewegung zu bilden.

14. Verfahren nach Anspruch 13, bei dem die Bewegung eines jeden Plattenteils (12) durch einen Hinhub und durch einen Rückhub festgelegt ist, und bei dem mindestens ein Plattenteil (12) den Hinhub simultan mit dem Rückhub mindestens eines anderen Plattenteils (12) durchführt.

15. Verfahren nach Anspruch 14, bei dem der Rückhub eines jeden Plattenteils (12) schneller als der Hinhub durchgeführt wird.

16. Verfahren nach Anspruch 14, bei dem die Anzahl der Plattenteile (12), die den Hinhub durchführen, größer ist als die Anzahl der Plattenteile (12), die den Rückhub ausführen.

## Revendications

1. Dispositif pour la fabrication d'un élément tubulaire comprenant:
- une base (3);
- un moteur;
- un mandrin (1) en engagement de manière opérante avec ladite base (3) pour être entraîné en rotation autour de son axe longitudinal ("X");
- des moyens de dépôt (5) associés de manière opérante audit mandrin (1) pour appliquer du matériau pour la formation d'un élément tubulaire à une zone d'application (6) dudit mandrin (1);
dans lequel ledit mandrin comporte:
- une structure support (9);
- une jupe (10) circonscrivant ladite structure support (9) et ayant une surface extérieure (11) agencée pour recevoir un matériau pour la formation d'un élément tubulaire dans une zone d'application (6),
- des moyens (7) d'avance opérant sur ladite jupe (10) pour éloigner ledit matériau de formation de la zone d'application (6),
dans lequel ladite jupe (10) comporte une pluralité d'éléments en forme de plaque (12) guidés de manière coulissante sur la structure support (9) et disposés d'une façon circonférentielle et réciproquement côte à côte, lesdits moyens d'avance (7) comprenant au moins un dispositif de commande (13) relié auxdits éléments en forme de plaque (12) pour transmettre un mouvement alternatif à ces derniers le long d'une direction essentiellement parallèle à l'axe longitudinal ("X") de la structure support (9), **caractérisé en ce que** ladite structure support (9) est reliée mécaniquement audit moteur pour être entraînée en rotation autour de son axe longitudinal ("X"), des moyens d'accouplement étant interposés entre ladite structure support (9) et ladite jupe (10) pour entraîner en rotation les éléments en forme de plaque (12) de ladite jupe (10), ces derniers étant solidaires de ladite structure support (9).

2. Mandrin selon la revendication 1, dans lequel le dispositif de commande (13) cause une course avant d'au moins un élément en forme de plaque (12) simultanément à une course retour d'au moins un autre élément en forme de plaque (12).

3. Mandrin selon la revendication 2, dans lequel le dispositif de commande (13) transmet simultanément la course avant à un nombre d'éléments en forme de plaque (12) plus élevé que le nombre d'éléments en forme de plaque (12) effectuant la course retour.

4. Dispositif selon la revendication 1, dans lequel lesdits moyens d'accouplement (17) comportent au moins un élément d'interconnexion (18) fixé de manière amovible à ladite structure support (9) et tournant ensemble avec l'un au moins desdits éléments en forme de plaque (12).

5. Dispositif selon la revendication 4, dans lequel lesdits éléments en forme de plaque (12) sont guidés par glissement sur ledit élément d'interconnexion (18).

6. Dispositif selon la revendication 4, dans lequel ledit élément d'interconnexion (18) a une surface extérieure (19) dans laquelle sont formés des sièges de glissement (20) s'étendant dans une direction parallèle à l'axe longitudinal ("X") de ladite structure support (9) et chaque élément en forme de plaque (12) a au moins un élément de glissement (21) insérable dans le siège de glissement respectif (20) de l'élément d'interconnexion (18).

7. Dispositif selon la revendication 6, dans lequel lesdits sièges de glissement (20) et éléments de glissement (21) ont un profil en coupe transversale essentiellement en queue d'aronde.

8. Dispositif selon la revendication 1, dans lequel ledit dispositif de commande (13) comporte au moins un élément fixe (14) circonscrivant ladite structure support (9) et portant au moins une came de guidage circonférentielle (15) interagissant avec une extrémité (12a) de chaque élément en forme de plaque (12) pour causer le mouvement alternatif de ce dernier.

9. Dispositif selon la revendication 8, dans lequel la surface de ladite came de guidage circonférentielle (15) fait saillie dudit élément fixe (14).

10. Dispositif selon la revendication 8, dans lequel ladite came de guidage circonférentielle (15) a au moins un premier et un deuxième tronçons hélicoïdaux consécutifs (15a, 15b) déterminant respectivement la course avant et la course retour de chaque élément en forme de plaque (12) guidé par glissement sur ladite structure support (9).

11. Dispositif selon la revendication 10, dans lequel lesdits premiers tronçons hélicoïdaux (15a), par rapport a une ligne de référence circonférentielle ("Z") dudit élément fixe, ont une inclinaison (α) de valeur plus petite et d'orientation opposée par rapport à une inclinaison (β) mesurable sur les deuxièmes tronçons hélicoïdaux (15b), de manière que la course retour de chaque élément en forme de plaque (12) est plus rapide que la course avant.

12. Dispositif selon la revendication 9, dans lequel ladite extrémité (12a) de chaque élément en forme de plaque (12) a au moins un siège de guidage (12b) engageant de manière opérante la came de guidage circonférentielle (15) pour son glissement le long de la structure support (9).

13. Procédé pour la fabrication d'un élément tubulaire,
**caractérisé en ce qu'**il comporte la séquence d'étapes suivante:
- entraîner en rotation une structure support (9) d'un mandrin (1) autour de son axe longitudinal ("X");
- appliquer un matériau pour la formation d'un élément tubulaire à une zone d'application (6) définie sur une surface extérieure (11) d'une jupe (10) circonscrivant ladite structure support (9);
- effectuer la translation du matériau pour la formation de l'élément tubulaire le long de la structure support (9) dans une direction s'éloignant de ladite zone d'application (6),
dans lequel la translation du matériau pour la formation de l'élément tubulaire est effectuée par la mise en marche d'une pluralité d'éléments en forme de plaque (12) disposés d'une façon circonférentielle et réciproquement côte à côte, à former ladite jupe (10), selon un mouvement rectiligne alternatif essentiellement parallèle à l'axe longitudinal ("X").

14. Procédé selon la revendication 13, dans lequel le mouvement de chaque élément en forme de plaque (12) est défini par une course avant et une course retour et dans lequel au moins un élément en forme de plaque (12) effectue la course avant simultanément à la course retour d'au moins un autre élément en forme de plaque (12).

15. Procédé selon la revendication 14, dans lequel la course retour de chaque élément en forme de plaque (12) est effectuée plus rapidement que la course avant.

16. Procédé selon la revendication 14, dans lequel le nombre d'éléments en forme de plaque (12) effectuant la course avant est plus élevé que le nombre d'éléments en forme de plaque (12) effectuant la course retour.
